(19) Europäisches Patentamt / European Patent Office / Office européen des brevets

(11) **EP 1 777 410 B1**

(12) **EUROPEAN PATENT SPECIFICATION**

(45) Date of publication and mention
of the grant of the patent:
**05.03.2008 Bulletin 2008/10**

(21) Application number: **05774492.2**

(22) Date of filing: **01.06.2005**

(51) Int Cl.:
*F03D 7/00* (2006.01)

(86) International application number:
**PCT/ES2005/070078**

(87) International publication number:
**WO 2006/008327 (26.01.2006 Gazette 2006/04)**

(54) **SYSTEM FOR CONTROLLING WIND TURBINE POWER, CONSISTING IN VARYING THE COEFFICIENT AND SIZE OF THE SWEPT AREAS**

SYSTEM ZUR WINDTURBINENENENERGIESTEUERUNG, BESTEHEND AUS DER ÄNDERUNG DES KOEFFIZIENTEN UND DER GRÖSSE DER FLÜGELFLÄCHEN

REGULATION DE LA PUISSANCE D'EOLIENNES MOYENNANT DES VARIATIONS DE COEFFICIENT DE PUISSANCE ET DE DIMENSION DE LA SURFACE BALAYEE

(84) Designated Contracting States:
**AT BE BG CH CY CZ DE DK EE ES FI FR GB GR HU IE IS IT LI LT LU MC NL PL PT RO SE SI SK TR**

(30) Priority: **04.06.2004 ES 200401366**

(43) Date of publication of application:
**25.04.2007 Bulletin 2007/17**

(73) Proprietor: **Esdras Automatica, S.L.**
**28230 Las Rozas de Madrid (ES)**

(72) Inventor: **TALAVERA MARTIN, Juan Antonio**
**E-28230 LAS ROZAS DE MADRID (ES)**

(56) References cited:
**EP-A1- 0 450 217          US-A- 4 703 189**
**US-B1- 6 394 745          US-B1- 6 441 507**

**Description**

## OBJECT OF THE INVENTION

The report describes a patent of a system for controlling the output power of wind turbines by active and dynamic modification of the power coefficient and swept bands dimension when the turbine is under different air speed conditions (such a system is known from EP-A-0450217).

## FIELD OF APPLICATION

Although the system can be used at any field where it is required the power control of a turbine, its main field of application is the electrical power generation by wind turbines. The size and speed of such turbines make technically easier to implement the system and the added complexity is compensated by the increased energy extracted from the wind.

## BACKGROUND ART

During the past decades has been proposed several control systems to cope with the high variability of the wind speed. We may classify them into two categories: active and passive systems. Within the passive category, the stall control is widely applied. Passive stall controlled wind turbines have the rotor blades bolted onto the hub at a fixed angle. The geometry of the rotor blade profile, however, has been aerodynamically designed to ensure that the moment the wind speed becomes too high, it creates turbulence on the side of the rotor blade which is not facing the wind. This stall prevents the lifting force of the rotor blade from acting on the rotor. The basic advantage of stall control is that one avoids moving parts in the rotor itself, and a complex control system. On the other hand, stall control represents a very complex aerodynamic design problem, and related design challenges in the structural dynamics of the whole wind turbine. So an increasing number of larger wind turbines are being developed with active instead of passive stall power control mechanism. However, probably today, the active system most widely used for large turbines is the pitch control. The output power is regulated by the angle of attack of the rotor blades. The rotor blades turn around their longitudinal axis (to pitch), reducing, or increasing, the wind forces over their surfaces.

## DISCLOSURE OF THE INVENTION

The proposed technique is an active control system. However, instead of controlling the aerodynamic forces with pitch or flaps, the system controls the combination of those forces with another fundamental parameter: the swept area. The output power of a wind turbine can be written, in a very compact form, by the following expression:

$$P = Cp * A * V^3$$

where Cp is the overall power coefficient related to aerodynamic forces efficiency, A is the swept area of the rotor, and V is the wind velocity. While the modem active systems aim to control the output power by varying the power coefficient Cp, the proposed system aims to control actively both Cp and A.

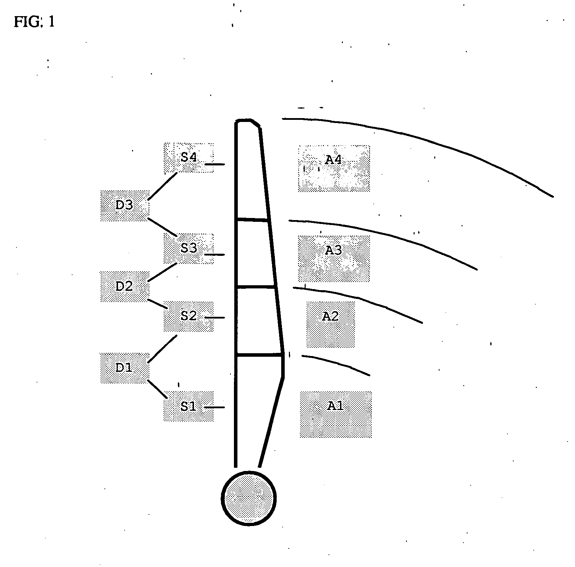

In figure 1 the rotor blade is composed by four blade segments: S1, S2, S3 and S4. Each segment has its own swept band area: A1, A2, A3, and A4. Each segment has its own particular profile so they have different power coefficients: $Cp_1$, $Cp_2$, $Cp_3$, and Cp4. The output power of the wind turbine can then be expressed by:

$$P = (Cp_1 * A1 + Cp_2 * A2 + Cp_3 * A3 + Cp_4 * A4) * V^3$$

If one segment changes its position there is a change in its own swept band area that depends of the distance to the center of rotation. Also there are changes of dimensions in other areas. For example, if the segment S3 approximates to center, there is a reduction of the area A2, invaded by the band area A3, and a reduction of the band area A4 if the relative position of S3 and S4 remain constant. Thus the sum of swept band areas has been decreased and consequently the output power of the wind turbine is less than before.

This is a powerful way of controlling the output power but the proposed system has still another. Let us suppose in the previous example that the other segment (S4, for example) moves away of (S3) in the center the same amount that (S3) moves to the center. One movement compensates the other and the total sum of the swept band areas remains unchanged. Also the total rotor diameter of the wind turbine keeps the same but there is change in the output power of the turbine. There is a different distribution of swept band areas. If the total swept area has not changed and there is a variation in the output power that means a variation of the overall power coefficient Cp. Even more, when a segment moves into other contiguous swept band area, appears a merging band with a new power coefficient.

A more direct variation of this coefficient can be done applying pitch control to any particular blade segment, or to a group of segments. Something to be considered is that the pitch of the first segment (S1) impacts over the pitch of the following segments (S2, S3, S4). The pitch of second segment (S2) impacts over its following segments (S3, S4) and so on. Another consideration is that the pitch angle for certain segments has very limited range for some positions due the profile geometry. And finally that, the coefficient can even reach negative values adding some swept band areas negative amounts to the total output power.

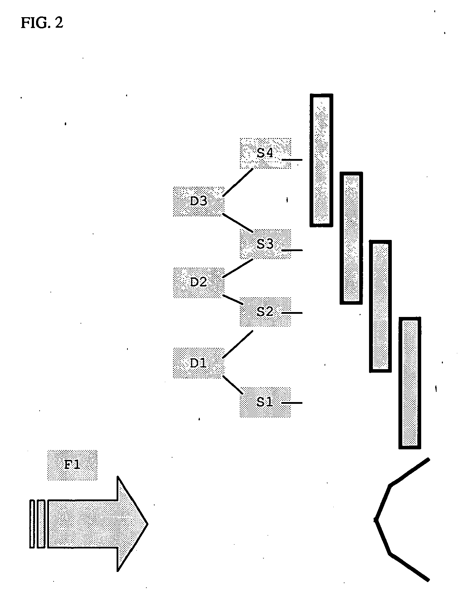

The dimensional change of the swept bands is done by the **dynamic pair of segments**. A dynamic pair is composed by two kinds of segments: the covering segment and the cancelable segment. The blade of the FIG. 1 has three dynamic pairs: D1, D2, and D3. In the first dynamic pair S2 is the covering segment and S1 the cancelable segment. In the second dynamic pair S3 is the covering segment and S2 the cancelable segment. And finally, in the third pair S4 is the covering segment and S3 is the cancelable segment. The covering segment is the segment that an observer placed at the position where the wind comes sees ahead of the other. It does not imply any thing about their relative size. In fact, the last segment S4 is the covering segment in the third dynamic pair (D3) and it is smaller than its cancelable partner segment S3 as it is shown in FIG. 1. Within a dynamic pair which segment is the covering and which one is the cancelable segment depends on the aerodynamic design of the turbine and can be freely selected, as well as, their relative sizes and the relative distances between them in all directions. In the FIG. 2 it is shown the resulting space position of the segments relative to the air flow direction (F1) with the distribution of dynamic pairs as selected example.

The reduction in the total swept band area of the dynamic pair is obtained by sliding one segment on the other segment of the pair: that is increasing the merging band. On the other hand, an increment of the total swept band area is obtained by decreasing the merging band. An important consideration is that the segments usually are portions of blades with wing profile to optimize the net aerodynamic forces but some times they are rather supporting structures and then their profile or external cover are designed to produce low interference to the air flow.

The relative movements between the segments are performed by motors or actuators. Usually, although there are some kinds of embodiments that not meet this rule, for each dynamic pair of segments there is one bi-directional (two-way) actuator. The motors and actuators are controlled independently of other dynamic pairs of segments. So they could have different relative positions at any period of time. On the other hand, there is an important characteristic of the system related with the relative position of the segments: **interblade segments cooperative control**. For wind turbines with two or more blades, the swept band areas of the segments of one blade are merged with the swept band areas of the others blades.If the relative position of any segments is independently controlled, it is possible to optimize the output power of the whole system by combination of the position of segments of different blades. Even more, this control can be so powerful that can dynamically modify the gravity center of the rotor or the distribution of the aerodynamic forces to compensate oscillations.

Compare with modem power control systems, the proposed control by swept bands coefficient and dimension variations has several advantages such, for example, as:

- wind turbines can enter in operation at lower wind speed with maximum swept band areas and power coefficients;
- wind turbines may remain in full production till higher wind speed with segments at the position of withstanding high aerodynamic forces;
- the aerodynamic design can be improved segment by segment of blade for operation at specific wind speeds and in coordination with other segments;
- interblade segments cooperative control may further optimizes the output power of the turbine at any wind velocity.

Thus, for a wind turbine of a determined power placed at a specific location, the aggregation of these advantages leads to an estimated annual production of electrical energy higher than previous systems.

Another complementary advantages are related with logistic and security. Thus, the segmented rotor blades require less space for transportation when are retracted at its shortest dimension. This reduced dimension provides an important advantage too: the wind turbines with swept band coefficient and dimensional control can survive stronger winds than any other turbine type.

## BRIEF DESCRIPTION OF THE DRAWINGS

FIG. 1 illustrates a turbine blade at four segments and three dynamic pairs with all their swept band areas at 100%.
FIG. 2 illustrates the same turbine blade seen from a point of view perpendicular to the airflow and with swept band areas of around 50%, 40%, 30% and 60% of its rated values.
FIG. 3 illustrates a turbine of a main blade with a dynamic pair of segments and two additional standard blades.

## DESCRIPTION OF PREFERRED EMBODIMENTS

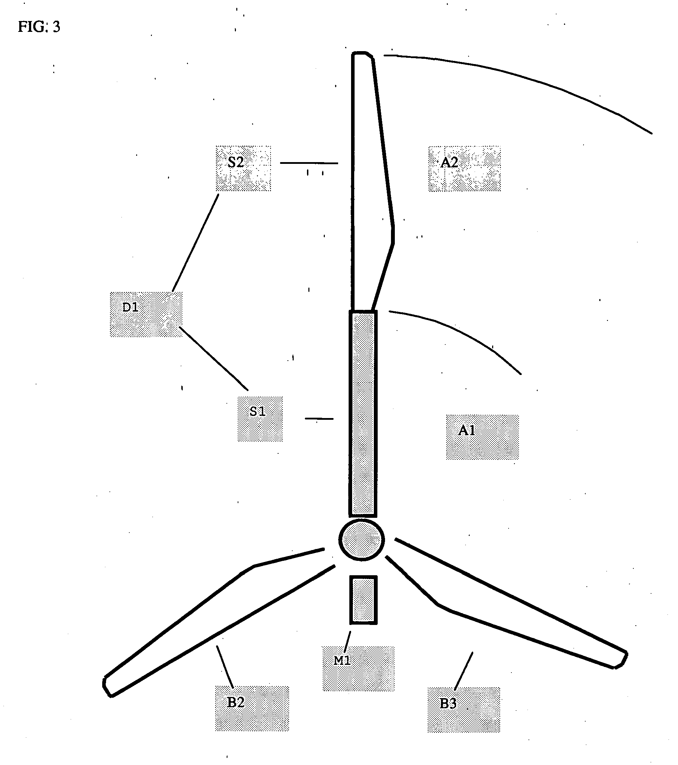

The system can be applied in one blade, as well as, in two or other number of blades wind turbines. The FIG. 3 illustrates a hybrid between one blade and three blade wind turbine. The main blade has two segments S1 and S2 with the swept band areas A and A2 respectively. They form a dynamic pair of segments with the covering segment S2 sliding over the segment S1. S1 is rather a supporting structure with a low air drag profile. The movements are produced by electrical motors in the coupling structure of the segment S2 to the segment S1, or at other positions and with cables for transmission of forces. The segment S1 acts as a supporting structure, as well as, a movement guide. The electrical motor rotation is translated to a linear movement over the guide. Thus the segment S2 moves along the guide. Another alternative is using electrical linear actuator or hydraulic, as well as, pneumatic cylinders. In these cases the actuators are along the segment S1. The moving head of the actuator is attached to the coupling structure of segment S2. The actuator has power electronic drivers, or fluid valves, and receives commands from the output power control system of the wind turbine. The control system send the commands according to, among several other signals, the wind speed, electrical power generated and positions, as well as angles, of segments and blades.

At low wind speeds the power generation is dominated by swept band A2. At high wind speeds there is a swept merging band resulting of the combination of segments S1 and S2 plus the others blades B2 and B3. These blades are smaller with only pitch control and specifically designed for high wind operation. They also play and important role for stability compensations.

Finally, in FIG. 3 appears a mass compensation and complementary supporting structure M1.

The terms used in this report are not meant to limit their wider interpretation. The materials, forms and dispositions of the elements can be changed as long as the essence of the invention is not altered.

## Claims

1. Power control system of wind turbines by active and dynamic variation of the power coefficient and swept bands dimension comprising at least one turbine blade **characterised in that** it comprises a number of segments (S) which are grouped forming at least one dynamic pair of segments (D) with no limitations to the relative size of all dimensions of the segments (S) and that one segment of the pair slides on the other segment of the pair following the commands of the wind turbine control system.

2. Power control of wind turbines by swept bands coefficient and dimension variations in accordance with claim 1, **characterised by** a number of segments and a number of blades with pitch control mechanism.

## Patentansprüche

1. System zur Windturbineenergiesteuerung, bestehend aus der änderung des Koeffizienten und der Grösse der Flügelflächen, mindestens einem Turbinenblatt, **dadurch** charakterisiert, dass es sich aus einer Anzahl von Segmenten (S), die so gruppiert sind, dass sie mindestens ein dynamisches Segmentpaar (D) bilden, ohne Begrenzungen ihrer relativen Größe aller Dimensionen der Segmente (S) und das ein Segment des Paares auf einem anderen Segment dieses Pares gleitet, wobei es die Befehle des Windturbinenkontrollsystems befolgt.

2. System zur Windturbineenergiesteuerung, bestehend aus der änderung des Koeffizienten und der Grösse der Flügelflächen, in Übereinstimmung mit Anspruch 1, charakterisiert durch eine Anzahl von Segmenten und eine Anzahl von Blättern mit Flügelvesrstellager Neigungskontrollmechanismus.

## Revendications

1. - Régulation de la puissance d'éoliennes moyennant des variations de coefficient de puissance et de dimension de la surface balayée comportant au moins une pale de turbine **caractérisée en ce qu'**elle comporte un certain nombre de segments (S) qui sont groupés formant au moins une paire dynamique de segments (D) sans des limitations à la taille relative de toutes les dimensions des segments (S) et qu'un segment de la paire glisse sur l'autre segment de la paire suivant les commandes du système de commande d'éolienne.

2. - Régulation de la puissance d'éoliennes moyennant des variations de coefficient de puissance et de dimension de la surface balayée selon la revendication 1, **caractérisée par** un certain nombre de segments et un certain nombre de palets avec le contrôle à calage variable de pale.

FIG. 1

FIG. 2

FIG. 3

**EP 1 777 410 B1**

## REFERENCES CITED IN THE DESCRIPTION

### Patent documents cited in the description

- EP 0450217 A